# EUROPEAN PATENT APPLICATION

(11) **EP 3 240 355 A1**
(43) Date of publication of application: **01.11.2017**
(21) Application number: 14909100.1
(22) Date of filing: 26.12.2014
(51) Int. Cl.: H04W 84/10, H04W 64/00

(54) **LOCATION DETERMINATION SYSTEM AND LOCATION DETERMINATION PROGRAM**

(71) Applicant: Nomura Research Institute, Ltd., Chiyoda-ku, Tokyo 1000004 (JP)
(72) Inventor: MOTOMURA, Kenta, Tokyo 100-0005 (JP); KAMIYA, Kotaro, Tokyo 100-0005 (JP)
(74) Representative: Hoffmann Eitle
(86) International application number: PCT/JP2014/084661
(87) International publication number: WO 2016/103498

(57) **Abstract**

In a position estimation of a terminal using a beacon, the precision is improved by reducing influences of noise due to moving obstacles such as human so that a beacon region can be easily and flexibly constituted. According to a typical embodiment, a portable terminal includes a location determination unit that acquires beacon information including a reception intensity of each of beacon signals received from one or more of the beacon terminals, accumulates history data as beacon detection information, acquires a plurality of pieces of the beacon information accumulated as the beacon detection information and contained within a past predetermined period at every predetermined interval, aggregates the beacon information by scoring, and determines the beacon terminal located most closely based upon scores.

## Description

### TECHNICAL FIELD

The present invention relates to a position estimation technique, in particular, a technique effectively applicable to a location determination system and a location determination program using Bluetooth (registered trademark, the same applies hereinafter) beacons.

### BACKGROUND ART

As a technique for detecting and measuring a position of a movable terminal, a technique of measuring the position based upon a situation of wireless communication with a base station, an access point or the like has been known as a technique capable of measuring the position even indoors, in addition to a measuring technique using a GPS (Global Positioning System) sensor.

For example, Japanese Unexamined Patent Application Publication No. 2008-104029 (Patent Document 1) has disclosed a technique for estimating a position of a wireless terminal by, for example, the principle of triangulation based upon signal intensity information of a signal received by the wireless terminal from a base station and positional information of the location of the base station. Moreover, Japanese Unexamined Patent Application Publication No. 2012-521557 (Patent Document 2) has disclosed a position detection technique using the so-called finger printing method.

In these wireless communications, a method in which ingress and egress of a terminal to and from a beacon region are detected by receiving a beacon signal transmitted from a base station or an access point at a constant cycle is adopted in some cases. Moreover, in recent years, Bluetooth beacon in compliance with the BLE (Bluetooth Low Energy) standard that is communicable with extremely small power consumption has increasingly widespread as the beacon signal. As the Bluetooth beacon, for example, iBeacon (registered trademark, the same applies hereinafter) made by Apple Inc. (registered trademark) (Non-Patent Document 1) or the like has been known, and portable terminals such as smartphones and various devices including it as the standard item have also been provided.

### RELATED ART DOCUMENTS

### PATENT DOCUMENTS

Patent Document 1: Japanese Unexamined Patent Application Publication No. 2008-104029
Patent Document 2: Japanese Unexamined Patent Application Publication No. 2012-521557

### NON-PATENT DOCUMENTS

Non-Patent Document 1: "iBeacon for Developers", [online], Apple Inc., [November 4, 2014, Retrieved], Internet <URL:https://developer.apple.com/ibeacon/>

### SUMMARY OF THE INVENTION

### PROBLEMS TO BE SOLVED BY THE INVENTION

In the case when Bluetooth beacon is used for the estimation of a position of a terminal like in the conventional technique, since the signal of Bluetooth beacon has basically no directivity in radio wave intensity and is easily influenced by environmental factors including moving obstacles such as human and reflections by walls and ceilings, the measuring precision of signal intensity is not so high. Consequently, the application of Bluetooth beacon to the position estimation using the triangulation that requires comparatively precise values is not so suitable because errors in the position estimation results become large.

Moreover, in the case of using the so-called finger printing method, it is necessary to preliminarily form a map in which positions of base stations and access points and information of predicted signal intensities are mutually associated as a preparatory work, and also to update the map each time when the installation position of the base station or access point is altered, and thus there is a problem of a high operation load.

Therefore, an object of the present invention is to provide a location determination system and a location determination program that can improve the precision by reducing influences of noise due to moving obstacles such as human and also easily and flexibly constitute a beacon region in the terminal position estimation using beacon.

The above and other objects and novel characteristics of the present invention will be apparent from the description of the present specification and the accompanying drawings.

### MEANS FOR SOLVING THE PROBLEMS

The following is a brief description of an outline of the typical invention disclosed in the present application.

A location determination system according to a typical embodiment of the present invention estimates a position of a portable terminal capable of receiving beacon signals transmitted from a plurality of beacon terminals in an environment where the beacon terminals are installed, and have following characteristics.

Namely, the portable terminal includes: a location determination unit that acquires beacon information including a reception intensity of each of the beacon signals received from one or more of the beacon terminals, accumulates history data as beacon detection information, acquires a plurality of pieces of the beacon information accumulated as the beacon detection information and contained within a past predetermined period at every predetermined interval, aggregates the beacon information by scoring, and determines the beacon terminal located most closely based upon scores.

Moreover, the present invention can be applied also to a location determination program that makes a computer execute processes so as to function as the above-mentioned location determination system.

### EFFECTS OF THE INVENTION

The effects obtained by the typical invention disclosed in the present application will be briefly described below.

Namely, according to the typical embodiment of the present invention, it is possible to improve the precision by reducing influences of noise due to moving obstacles such as human and also to easily and flexibly constitute a beacon region in the terminal position estimation using beacon.

### BRIEF DESCRIPTIONS OF THE DRAWINGS

FIG. 1 is a view showing the outline of a configuration example of a location determination system according to a first embodiment of the present invention;
FIG. 2 is a view showing the outline of an example in which beacon information detected by a user terminal is accumulated as history data according to the first embodiment of the present invention;
FIG. 3 is a view showing the outline of an example in which the location of a user terminal is estimated based upon history information of reception intensity of a beacon signal according to the first embodiment of the present invention;
FIG. 4 is a view showing the outline of another configuration example of the location determination system according to the first embodiment of the present invention;
FIG. 5 is a view showing the outline of still another configuration example of the location determination system according to the first embodiment of the present invention;
FIG. 6 is a view showing the outline of an example of a relation between a beacon region and a range of precision required for the beacon region;
FIG. 7 is a view showing the outline of an example in which a termination of an effective region is forcibly set for a target beacon region according to a second embodiment of the present invention; and
FIG. 8 is a view showing the outline of another example of forming a detection region according to the second embodiment of the present invention.

### DETAILED DESCRIPTION OF PREFERRED EMBODIMENTS

Hereinafter, embodiments of the present invention will be described in detail with reference to the accompanying drawings. Note that components having the same function are denoted by the same reference characters throughout the drawings for describing the embodiments, and the repetitive description thereof will be omitted.

### (First Embodiment)

### <System Configuration>

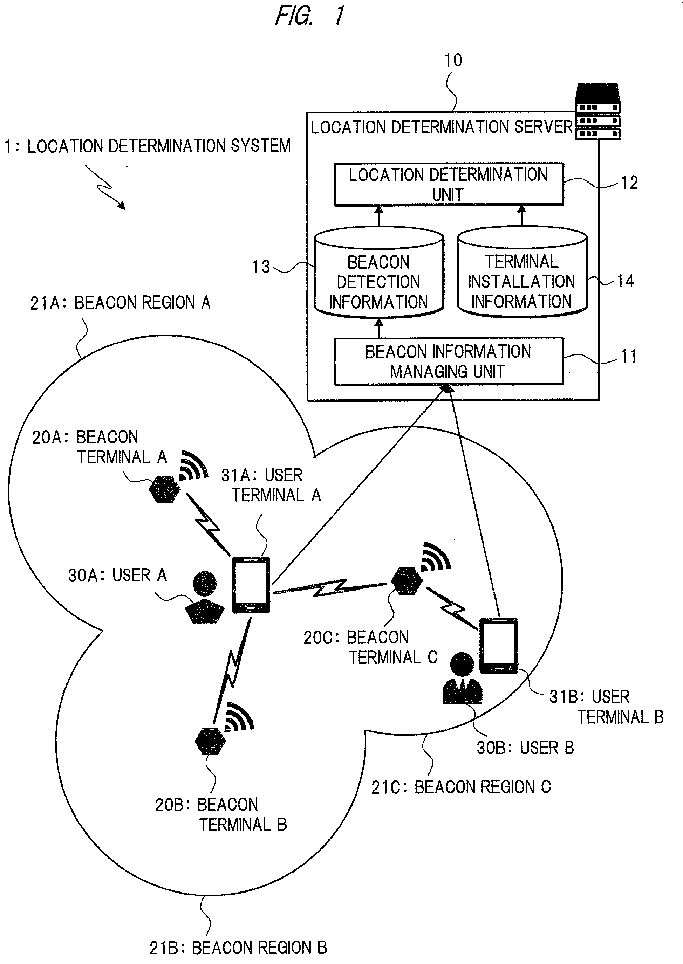

FIG. 1 is a view showing the outline of a configuration example of a location determination system according to a first embodiment of the present invention. In a location determination system 1 according to the present embodiment provided in an environment in which a plurality of beacon terminals (in the drawing, beacon terminal A (20A) to beacon terminal C (20C), which are hereinafter sometimes referred to collectively as beacon terminals 20) are installed, based upon information such as intensity of beacon signals received by portable user terminals (in the drawing, user terminal A (31A) and user terminal B (31B), which are hereinafter sometimes referred to collectively as user terminals 31) which receive the beacon signals from one or more of the beacon terminals 20, the beacon terminal 20 near which a target user terminal 31 is located (that is, the nearest beacon terminal 20) is estimated in a location determination server 10.

The beacon terminal 20 is a terminal or a device such as an iBeacon device that outputs a Bluetooth beacon signal at constant intervals, and may be an exclusively-used terminal or a general-use terminal. For the beacon terminals 20, beacon regions (in the drawing, beacon region A (21A) to beacon region C (21C), which are hereinafter sometimes referred to collectively as beacon regions 21) are respectively defined, and a device located within the beacon region 21 can receive a beacon signal.

The user terminal 31 is an information processing terminal or device that can detect the Bluetooth beacon signal, and is supposed to be, for example, a portable terminal such as a smartphone provided with iBeacon function in the present embodiment. The position of the user terminal 31 can vary by the movement of a user who carries it (in the drawing, user A (30A) and user B (30B) who are hereinafter sometimes referred to collectively as users 30). Moreover, the user terminals 31 can respectively carry out data communication with the location determination server 10 through a network such as the Internet (not shown) by wireless communication functions such as the wireless LAN and mobile communication.

The user terminal 31 can determine whether or not it is located within (comes into or goes out from) a corresponding beacon region 21 depending on whether or not it can receive the beacon signal from the beacon terminal 20 ("monitoring" function in iBeacon). Moreover, in the case when communication with the beacon terminal 20 is available (located within the beacon region 21), the user terminal 31 can acquire information such as an identification number for uniquely identifying each of the beacon terminals 20 and estimated radio wave intensity (estimated radio wave intensity at a point 1 m away from the beacon terminal 20) from the corresponding beacon terminal 20. The user terminal 31 can calculate an approximate distance from the target beacon terminal 20 based upon a ratio between the radio wave intensity actually detected and the estimated radio wave intensity and radio wave characteristics ("ranging" function in iBeacon). Note that it is supposed that only a function corresponding to the "ranging" function is used in the present embodiment.

Moreover, in the present embodiment, by sending beacon information including the identification information of the beacon terminal 20 and the reception intensity of the beacon signal at the user terminal 31 and identification information such as detection time of the beacon signal and a user ID for specifying the user 30 (or user terminal 31) to the location determination server 10, the position of the user terminal 31 is estimated on the server side by a method to be described later.

The location determination server 10 is, for example, a server system constituted of an information processing device such as a PC (personal computer), a server apparatus or a virtual server configured on a cloud computing service, and has a function of estimating the beacon terminal 20 near which the target user terminal 31 is located, based upon information transmitted from each of the user terminals 31 such as the intensity of the beacon signal received by each of the user terminals 31.

The location determination server 10 includes respective units such as a beacon information managing unit 11 and a location determination unit 12 that are installed as software operated on middleware such as an OS (Operation System) or a DBMS (DataBase Management System) (not shown). Moreover, the location determination server 10 further includes respective data storing units for beacon detection information 13, terminal installation information 14 and the like that are installed as a database, a file table and the like.

The beacon information managing unit 11 has a function of acquiring the beacon information or the like transmitted from each of the user terminals 31 and recording the information in the beacon detection information 13 as history data in units of the user 30 (or user terminal 31). Note that, since the amount of data might become extremely large because the data is retained as history data, the history information to be retained may be limited to a fixed amount by, for example, limiting to a fixed period of time or limiting to a fixed number of pieces for each of the users 30 (or user terminals 31).

The location determination unit 12 has a function of estimating the position in the form of the beacon terminal 20 near which the target user 30 (or user terminal 31) is located (location), based upon the beacon information and the like accumulated in the beacon detection information 13, and outputting the result of estimation. Note that it is supposed that master information including the installation position or the like of each of the beacon terminals 20 is registered in the terminal installation information 14. The output destination of the estimation result may be the target user terminal 31 or may be another system or the like that wants to utilize the positional information of each of the user terminals 31.

With the configuration in which the position estimation of each of the users 30 (or user terminals 31) is carried out on the side of the location determination server 10 in a lump like in the present embodiment, advantages that the position of each of the users 30 (or user terminals 31) can be confirmed and managed in real time on the side of the location determination server 10 in a lump and actively utilized for other businesses can be obtained.

### <Position Estimation Method>

In the case when there is only one beacon terminal 20 in the Bluetooth beacon, since it is possible to detect whether or not the user terminal 31 is located within the beacon region 21 of the corresponding beacon terminal 20 ("monitoring" function in iBeacon), it is possible to easily determine that the user terminal 31 is located near the corresponding beacon terminal 20. Moreover, an approximate distance from the target beacon terminal 20 can be calculated in the user terminal 31 based upon information such as detected radio wave intensity ("ranging" function in iBeacon). However, since the Bluetooth beacon signal has no directivity, although the approximate distance between the beacon terminal 20 and the user terminal 31 can be estimated, it is not possible to confirm which direction it is located in. In order to confirm the direction and positional relationship, it is necessary to install a plurality of beacon terminals 20 and measure the distances and the like among them.

Moreover, since there is a limitation in the size of the beacon region 21, it is necessary to install a plurality of beacon terminals 20 also when the position estimation using the Bluetooth beacon is carried out in a wide region. At this time, in order to prevent the occurrence of undetectable regions, the beacon terminals 20 are sometimes installed so that the plurality of beacon regions 21 are overlapped with one another as shown in the example of FIG. 1. In this case, for example, the user terminal is sometimes located in a region where the plurality of beacon regions 21 are overlapped with one another, so that the user terminal is brought into a state capable of receiving beacon signals from the plurality of beacon terminals 20 like the user terminal A (31A).

In this situation, there is sometimes a case in which it is not possible to determine at which position the user terminal 31 is actually located even if it is determined whether or not the user terminal 31 is located within any one of the beacon regions 21. For example, even the state where the user terminal 31 can receive the beacon signals from the plurality of beacon terminals 20 may actually be the case in which the user terminal 31 is located extremely close to any one of the beacon terminals 20, so that the user terminal 31 receives the signal from the corresponding beacon terminal 20 at a strong signal intensity, while the user terminal 31 is located far from the other beacon terminals 20, so that the user terminal 31 receives the signal from these beacon terminals 20 at a weak signal intensity.

Therefore, in order to appropriately determine the beacon terminal 20 near which the user terminal is located even in such a situation, it is necessary to measure the distance to each of beacon terminals 20 from which beacon signals can be received ("ranging" function in iBeacon) instead of determining whether or not the user terminal is located within any one of the beacon regions 21. However, since Bluetooth beacon signals are easily influenced by environmental factors including moving obstacles such as human, walls, ceilings, pillars and the like and the signal intensity greatly varies even when a human simply passes nearby, it is sometimes difficult to obtain sufficient precision for the measured distance. Therefore, in the case when the user terminal can receive the beacon signals from the plurality of beacon terminals 20, there is sometimes a case in which it is not possible to appropriately determine the beacon terminal 20 near which the user terminal is located.

For this reason, in the present embodiment, in order to avoid and reduce the influences caused by the variation of the reception intensity of the beacon signal in the user terminal 31 due to a moving obstacle such as human, beacon information such as the reception intensity of the beacon signal is accumulated as history data, and is aggregated based upon a plurality of pieces of beacon information contained in a predetermined past time width at each constant period, thereby leveling and smoothing the values in a time-series order.

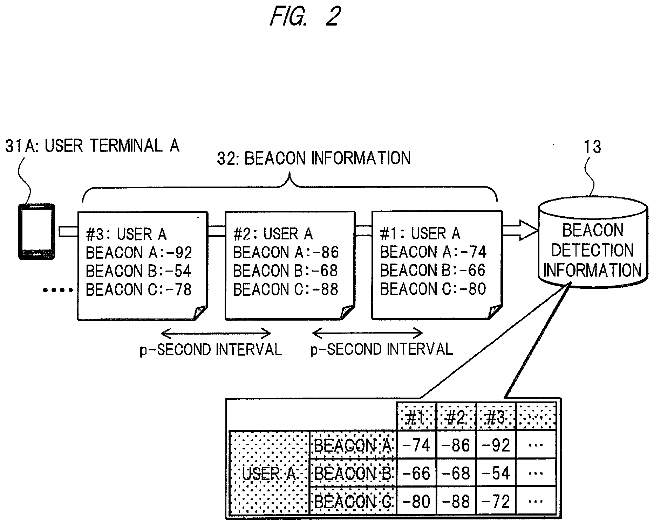

FIG. 2 is a view showing the outline of an example in which beacon information detected by the user terminal 31 is accumulated as history data. In the example of FIG. 2, the user terminal A (31A) in the example of FIG. 1 sequentially transmits beacon information 32 detected at constant intervals to the location determination server 10 at constant intervals so as to be accumulated in the beacon detection information 13 as history data. The beacon information 32 includes, as information obtained by the Bluetooth beacon function, identification information for specifying the beacon terminal 20 (respective parameters "proximity UUID", "major" and "minor" in iBeacon) and information relating to receiving state including the received radio wave intensity (respective parameters "proximity", "RSSI" and "accuracy" in iBeacon), and identification information of user A (30A) such as user ID and time stamp are added thereto by the user terminal A (31A).

In the example of FIG. 2, for convenience of description, identification information ("user A") of a user A (30A) who is an owner of the user terminal A (31A), reception intensities of respective beacon signals (parameter "RSSI" in iBeacon and indicated as dBm unit in the drawing) for each of the beacon terminals 20 from which the beacon signals can be received (beacon terminal A (20A) is indicated as "beacon A", beacon terminal B (20B) is indicated as "beacon B" and beacon terminal C (20C) is indicated as "beacon C"), and time stamp (indicated as transmission order "#1" to "#3" in the drawing for convenience of description) are only described in each piece of beacon information 32 that is sequentially transmitted from the user terminal A (31A) at constant intervals (p-second interval in the drawing).

In the beacon detection information 13, the contents of beacon information 32 transmitted from the user terminal 31 at constant intervals are accumulated as history data for each of the users 30 (or user terminals 31). As shown in the example of FIG. 2, the value of the reception intensity of the beacon signal varies with the elapse of time. Therefore, if the distance between the beacon terminal 20 and the user terminal 31 is calculated based upon only the reception intensity at each timing, the calculation result is greatly influenced by the variations of the reception intensity.

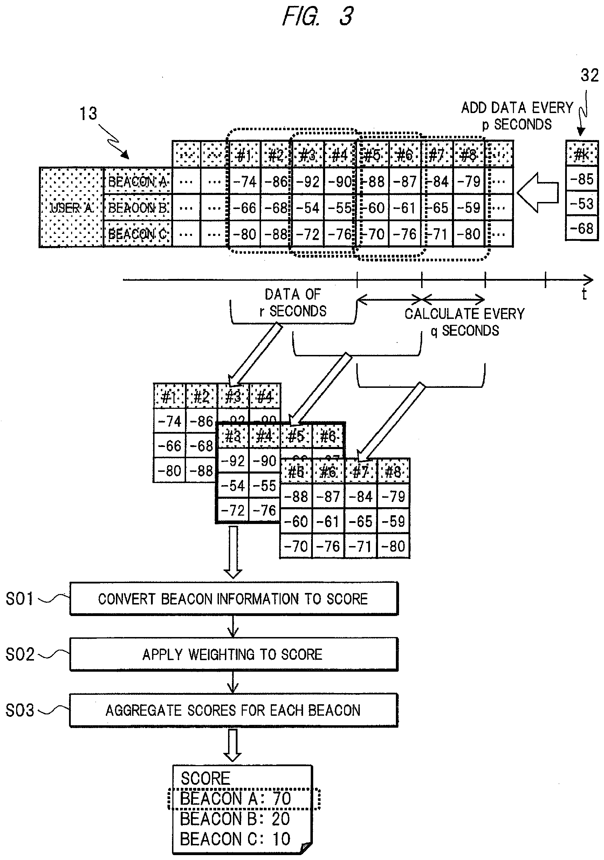

FIG. 3 is a view showing the outline of an example in which the location of the user terminal 31 is estimated based upon history information of reception intensity of the beacon signal. In the present embodiment, when dealing with the values of the reception intensity of the beacon signals accumulated in the beacon detection information 13 shown in an upper part of the drawing, scoring is carried out for each of the beacon terminals 20 at each constant interval (every q seconds in the example of FIG. 3) based upon data of a predetermined period (r seconds in the example of FIG. 3, r>q>p) which includes pieces of information of reception intensities at least at a plurality of timings instead of using only the value at each timing, and the user terminal 31 is treated as being located near the beacon terminal 20 having the highest score.

As shown in the drawing, in the beacon detection information 13, data of new beacon information 32 is added to the end thereof in the time series order for every p seconds. In this state, based upon data of the past r seconds, the location determination unit 12 of the location determination server 10 calculates the score from the value of the reception intensity for each beacon terminal 20 for every q seconds. In this case, as shown in the upper part and the middle part of the drawing, the scoring is carried out every q seconds by sequentially taking out the data of the beacon information 32 of r seconds from the data accumulated in the past. Therefore, by using lists in which FIFO (First In, First Out) process can be easily dealt or queues with preferential order, the data configuration of the beacon detection information 13 can be easily dealt, and the processing efficiency can be improved.

Moreover, in the example of FIG. 3, data "#3" and data "#4" are overlapped in the data of r seconds that is taken out first (transmission order "#1" to "#4") and the data of r seconds that is taken out second (transmission order "#3" to "#6"). Namely, it indicates that data of "#1" and "#2" of the data of r seconds that is taken out first are no longer utilized, but data of "#3" and "#4" can be utilized again in the subsequent scoring process (next process in the example of FIG. 3). Note that the past data that are no longer utilized may be subjected to abandonment or elimination at the time of maintenance.

Furthermore, the middle part and thereafter in the example of FIG. 3 show an example of a flow of the process of carrying out the scoring based upon the data of r seconds (transmission order "#3" to "#6") that is taken out second. First, values of all the target beacon information 32 (values of reception intensity of beacon signals in FIG. 3) are converted to scores based upon a predetermined standard (S01). The conversion standard is not particularly limited. For example, it is possible to set a standard in which the value becomes larger as the distance between the beacon terminal 20 and the user terminal 31 becomes closer as appropriate.

Next, predetermined weighting is applied to each of scores obtained in the step S01 so that newer data have higher weighting (S02). In the case of four pieces of data "#3" to "#6" referred to as examples, data "#6" is the newest data. The method of weighting is not particularly limited. For example, it is possible to use a method in which the score of s seconds before (past) is reduced to 1/s by multiplying it by a function of f (t) = 1/t. The past score may be reduced by using an exponential function such as f (t) = a^(-t).

Thereafter, the respective scores obtained in the step S02 are aggregated by, for example, adding and averaging the values for each of the beacon terminals 20 (S03). It is determined that the user 30 (or user terminal 31) is located near the beacon terminal 20 whose score thus aggregated is the highest. In the example of FIG. 3, the score of the beacon terminal A (20A) ("beacon A") is 70 that is the largest, and it is thus determined that the user 30 (or user terminal 31) is located near the beacon terminal A (20A) (that is, the closest beacon terminal 20 is the beacon terminal A (20A)) even in the installation state of the beacon terminals 20 in the example of FIG. 1.

Note that, even in the case when it is determined that the user terminal is located near the beacon terminal A (20A), it is sometimes required to confirm which position in the beacon region 21 the user terminal is located, that is, the position closer to the beacon terminal B (20B) or the position closer to the beacon terminal C (20C).

In accordance with the result of scoring in the example of FIG. 3, it is determined that the user terminal A (31A) is located near the beacon terminal A (20A) having the largest score. Moreover, since the score of the beacon terminal B (20B) is larger in the comparison between the score of the beacon terminal B (20B) and the score of the beacon terminal C (20C), it is determined that the user terminal is located near the beacon terminal A (20A) and also at a position closer to the beacon terminal B (20B) . More specifically, the user terminal may be treated as being located near an internally dividing point of the installation positions of the respective beacon terminals 20 based upon, for example, the ratio of the scores of the respective beacon terminals 20.

Note that, although the reception intensity of the beacon signal (parameter "RSSI" in iBeacon) is used as the beacon information 32 to be the target for scoring in the present embodiment, the present invention is not limited to this. For example, information such as the proximity degree between the beacon terminal 20 and the user terminal 31 (parameter "proximity" in iBeacon) may be used in place of or in addition to the reception intensity.

As described above, in the location determination system 1 according to the first embodiment of the present invention, beacon information such as the reception intensity of the beacon signal received by the user terminal 31 is accumulated in the location determination server 10 as history data, and is scored and aggregated based upon a plurality of pieces of beacon information contained in a predetermined past time width at each constant period, thereby leveling and smoothing the values in a time-series order. Thus, it is possible to avoid and reduce the influences caused by the variation of the reception intensity of the beacon signal in the user terminal 31 due to a moving obstacle such as human, and it becomes possible to appropriately confirm the beacon terminal 20 near which the user terminal 31 is located (that is, beacon terminal 20 located closest to the user terminal 31). Moreover, the precision of determination can be further improved by applying higher weighting to newer data in the scoring based upon the beacon information.

In addition, since the preliminary work of forming a map that is needed in the finger printing method or the like is unnecessary and the installation positions of the beacon terminals 20 can be easily and flexibly altered, designing processes relating to the layouts of the beacon terminals 20 and the beacon regions 21 can be easily carried out, and the flexibility of designing can be enhanced.

Note that, in the configuration of the present embodiment, the user terminal 31 transmits beacon information and the like obtained by the beacon signal received from the fixed beacon terminal 20 to the location determination server 10, and the position of the user terminal 31 is estimated on the server side, but the present invention is not limited to this configuration.

For example, in order to improve the precision of position estimation in the configuration shown in the example of FIG. 1, it is desirable to carry out the position estimation by sequentially transmitting the beacon information with respect to all the beacon signals that the user terminal 31 can receive, to the location determination server 10. In this case, however, in an environment where a plurality of beacon terminals 20 are installed in a narrow region and a user terminal can receive beacon signals from the plurality of beacon terminals 20, the frequency at which the user terminal 31 transmits beacon information to the location determination server 10 sometimes becomes as high as several tens of times per second or the like. As a result, the power consumption of the user terminal 31 is increased to cause the state where the battery is consumed in a short period of time.

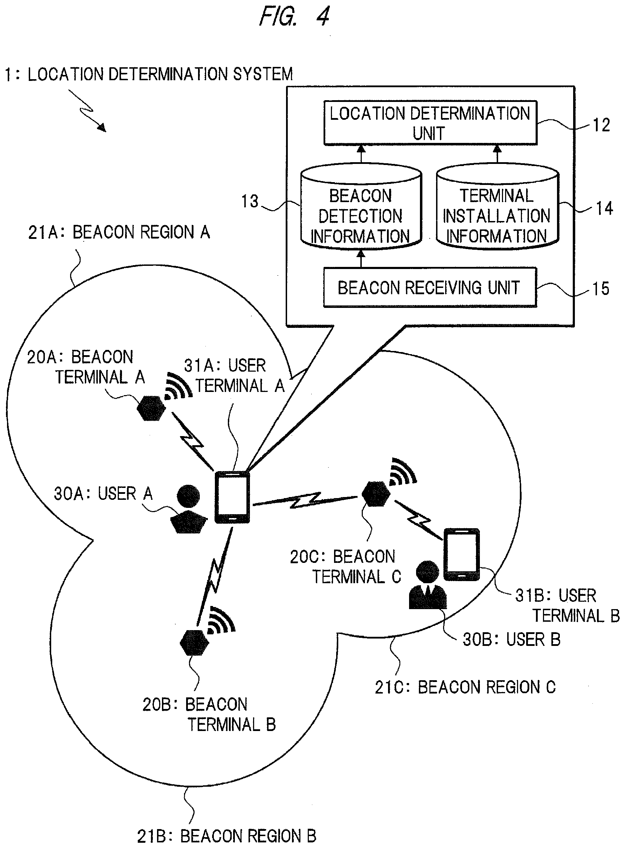

Therefore, another configuration example in which the position estimation function in the location determination server 10 is installed on the side of the user terminal 31 and the position estimation is directly carried out on the side of the user terminal 31 is also possible. FIG. 4 is a view showing the outline of another configuration example of the location determination system according to the first embodiment of the present invention. In this case, almost the same function and configuration as the location determination server 10 in the example of FIG. 1 are provided on the side of the user terminal 31 (FIG. 4 illustrates an example about the user terminal A (31A)).

The user terminal 31 includes a beacon receiving unit 15 having a function of receiving Bluetooth beacon signals, and acquires beacon information or the like obtained from the received beacon signals and records the information in the beacon detection information 13 as history data. Further, the location determination unit 12 estimates the beacon terminal 20 near which the corresponding user terminal 31 is located, by using the above-mentioned method based upon the beacon information and the like accumulated in the beacon detection information 13, and outputs the result of estimation.

Note that it is supposed that master information including installation positions or the like of the respective beacon terminals 20 is registered in the terminal installation information 14 like in the example of FIG. 1. The master information including the installation positions or the like registered as the terminal installation information 14 may be preliminarily recorded in the user terminal 31, or may be downloaded from a server (not shown) for managing master information at a timing of an activation or the like and retained as a cache for use. In any case, latest master information may be downloaded from the server and uploaded regularly or timely as appropriate.

Note that, also in the example of FIG. 4, the position of each of the users 30 (or user terminals 31) can be confirmed and managed in a lump on the side of the location determination server like in the example of FIG. 1 by regularly transmitting the positional information of the user terminals 31 individually estimated in each of the user terminals 31 to the location management server or the like (not shown) at predetermined intervals (for example, every 5 seconds) and accumulating the information therein.

Moreover, as another configuration example, it is also possible to estimate the position of the user 30 (or beacon terminal 20) in the configuration in which a portable terminal is fixedly disposed at a predetermined position and the user 30 carries the beacon terminal 20 in a manner inverse to the example of FIG. 1. Also in this case, in order to appropriately confirm the position of the user 30 (or beacon terminal 20) relative to the portable terminal fixedly disposed, it is necessary to provide a plurality of portable terminals so as to acquire a plurality of pieces of information (information of radio wave intensity of beacon signals) about distances between the beacon terminal 20 and the portable terminals like in the example of FIG. 1 or the like.

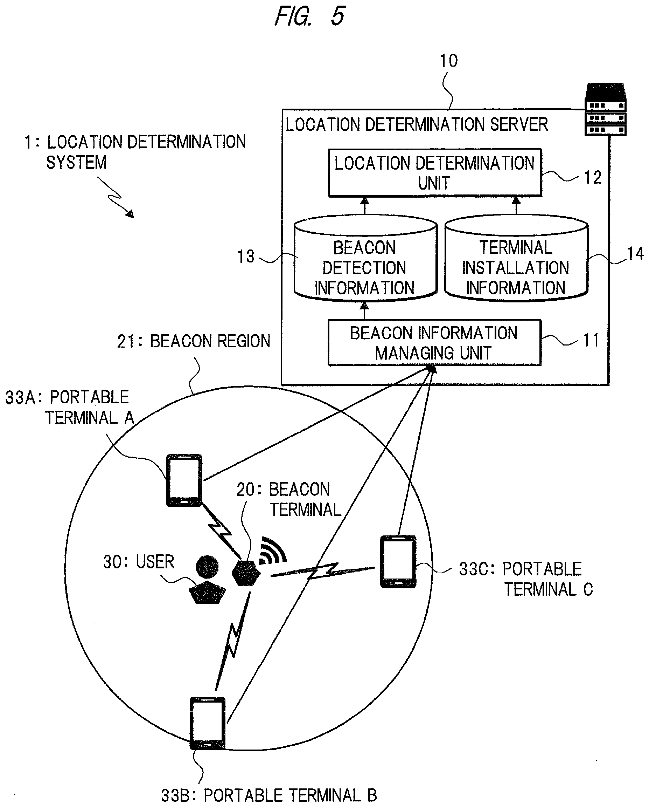

FIG. 5 is a view showing the outline of another configuration example of the location determination system according to the first embodiment of the present invention. The example of FIG. 5 shows a state in which a plurality of portable terminals 33 fixedly disposed (in the drawing, portable terminal A (33A) to portable terminal C (33C)) are located within the beacon region 21 of the beacon terminal 20 possessed by the user 30 who is movable.

In this case, each of the portable terminals 33 can acquire beacon information by receiving the beacon signal from the beacon terminal 20, and can estimate the distance to the beacon terminal 20 based upon information of reception intensity of the beacon signal. However, in order to estimate the position of the beacon terminal 20 (or user 30) based on the information, it is necessary to carry out calculation processes by collecting the beacon information or the like acquired by the respective portable terminals 33. Therefore, in the configuration of the example of FIG. 5, the location determination server 10 is provided like in the case of the example of FIG. 1, and the positional information is estimated on the side of the server by the method described above.

With the configuration of the example of FIG. 5, for example, if the portable terminals 33 are fixedly disposed at places where power supplies for charging or the like are available and the user 30 carries the beacon terminal 20 using iBeacon having extremely small power consumption, it is possible to avoid the problems of battery exhaustion of the portable terminal 33 and load required for charging. In this case, what is fixedly disposed is not limited to the portable terminal 33, and any device may be utilized as appropriate as long as it can receive beacon signals.

### (Second Embodiment)

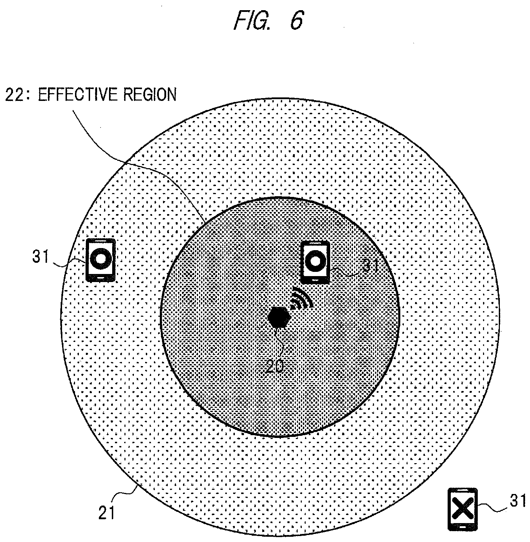

The Bluetooth beacon signal is easily influenced by an environment. On the other hand, its radio wave sometimes reaches about 100 m at most in indoors or the like having linear spatial characteristics without obstacles. FIG. 6 is a view showing the outline of an example of a relation between the beacon region 21 and a range of precision required for the beacon region. When an effective range capable of satisfying the precision required for the beacon region 21, that is, an effective region 22 capable of obtaining a sufficient intensity of beacon signal regardless of an influence such as environment is taken into consideration, the beacon region 21 where the beacon signal can reach sometimes becomes considerably larger than the effective region 22 depending on the environment as shown in the drawing. Although the beacon signal can reach the region outside the effective region 22, its intensity is very weak, and this portion needs to be excluded as noise.

In order to maintain predetermined precision in the position estimation by excluding as noise the case in which the user terminal 31 located outside the effective region 22 accidentally receives the weak beacon signal from the beacon terminal 20 (not treating the user terminal as being located inside the beacon region 21 with required precision), in the case when the reception intensity of the beacon signal received by the user terminal 31 is equal to or weaker than a predetermined threshold value, the user terminal 31 may be treated as not receiving the beacon signal (not being located inside the beacon region 21). In this method, however, the substantial beacon region 21 is set depending on the reception intensity of the beacon signal, and the actual range of the beacon region 21 may greatly vary due to the influences from environment.

Therefore, in the location determination system according to the second embodiment of the present invention, one or more termination beacon terminals 20 are disposed along an end portion or a peripheral edge portion of the effective region 22 corresponding to the range with required precision of the beacon region 21 set by the target beacon terminal 20, and the termination of the effective region 22 of the target beacon region 21 is forcibly set by beacon regions set by these termination beacon terminals 20. Consequently, the range of precision required for the target beacon region 21 is clearly set, so that the determination precision for the position estimation of the user terminal 31 can be improved.

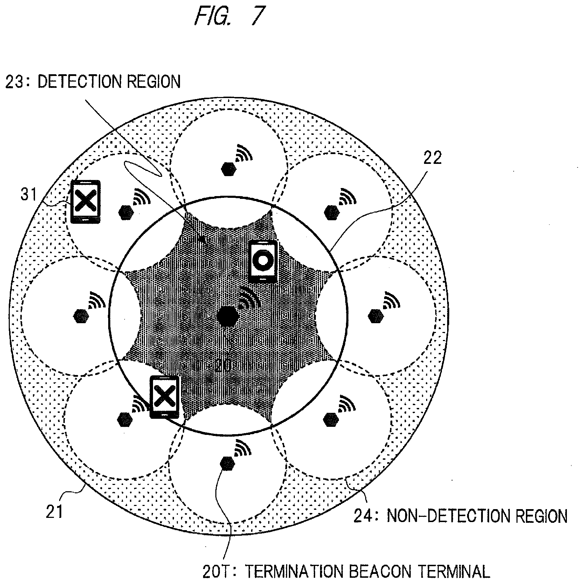

FIG. 7 is a view showing the outline of an example in which beacon regions that forcibly set the termination of the effective region 22 for the target beacon region 21 are provided. In this case, the effective region 22 in the beacon region 21 set by the target beacon terminal 20, that is, the target beacon region 21 in which the position estimation as to whether or not the user terminal 31 is located near the corresponding beacon terminal 20 is carried out is conceptually indicated. Moreover, a plurality of termination beacon terminals 20T are disposed so as to surround the periphery of the end portion of the effective region 22, and a non-detection region 24 serving as a beacon region in which no position estimation is carried out is set by each of the termination beacon terminals 20T. In this case, the termination beacon terminals 20T are disposed so that the entire end portion of the effective region 22 is covered with the respective non-detection regions 24 (overlapped with the non-detection regions 24). The region (densely hatched portion in the drawing) surrounded by the non-detection regions 24 is set as a detection region 23.

Moreover, in the case when the user terminal 31 capable of receiving a beacon signal with a predetermined intensity or higher from the target beacon terminal 20 is located outside the non-detection region 24, for example, the user terminal 31 is assumed as being located in the detection region 23, and the position estimation process of the user terminal 31 shown in the first embodiment is carried out. In other words, in the case when the user terminal 31 is determined to be located in any of the non-detection regions 24, the user terminal 31 is treated as not being located inside the detection region 23 (not receiving the beacon signal from the target beacon terminal 20).

Consequently, for example, if a weak beacon signal from a distant beacon terminal 20 is received outside the non-detection region 24 and effective region 22, this is excluded as noise, and on the other hand, in the case when the user terminal 31 is determined to be located in the non-detection region 24 regardless of the intensity of the beacon signal from the beacon terminal 20, it is possible to clearly avoid the case where the user terminal 31 is determined to be located near the target beacon terminal 20 (that is, in the detection region 23). Accordingly, the detection region 23 and the non-detection region 24 can be easily designed and configured. Note that the effective region 22 can be set as appropriate based upon a calculated distance for which the beacon signal transmitted from the beacon terminal 20 is assumed to have a predetermined effective intensity.

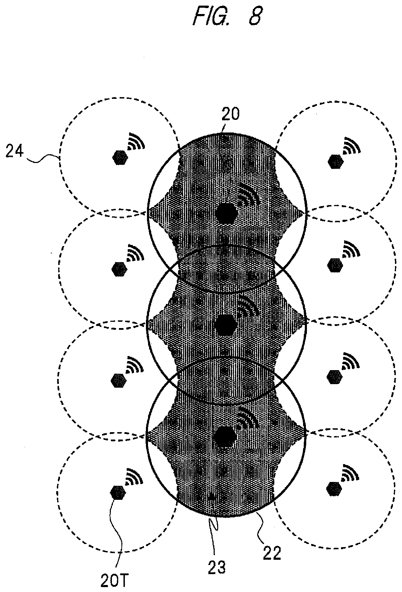

FIG. 8 is a view showing the outline of another example of forming the detection region 23. In the example shown in FIG. 7, the non-detection regions 24 are disposed so as to surround the periphery of the effective region 22, so that the detection region 23 is formed as a closed region. However, the method of forming the detection region 23 is not limited to this, and the detection region 23 may have various kinds of shapes. In the example of FIG. 8, a column-shaped detection region 23 can be configured by covering both sides of beacon regions (effective regions 22) arranged in a column in the center with non-detection regions 24. The detection region 23 having this shape may be applied to indoors or the like having linear spatial characteristics such as a long passage.

Moreover, in the example of FIG. 8, another configuration in which the column of the beacon regions in the center is used as the non-detection regions 24 by switching the functions of the detection region 23 and the non-detection region 24 is also possible. In this case, the non-detection regions 24 formed in the center serve as a wall having a function of separating the detection regions 23 on the both sides, and this configuration is applicable to the case in which beacon regions 21 that are respectively configured by adjacent shops are separated from each other in a shopping mall or the like. Note that, although the functions and attributes of the respective beacon regions 21 are separately set as the detection region 23 and the non-detection region 24 in the present embodiment, the functions and attributes are not limited to these. For example, another configuration in which security levels are different depending on the beacon regions 21 is also possible.

Furthermore, as the method of position estimation of the user terminal 31 in the present embodiment, the position estimation method shown in the first embodiment may be used, or the position determination function ("monitoring" or the like in the case of iBeacon) normally possessed by the Bluetooth beacon function may be used as appropriate. The present embodiment exerts an effect of realizing a method capable of improving the precision on hardware basis relative to these position estimation methods on software basis.

In the foregoing, the invention made by the inventors of the present invention has been concretely described based on the embodiments. However, it is needless to say that the present invention is not limited to the foregoing embodiments and various modifications and alterations can be made within the scope of the present invention. For example, the embodiments described above have been described in detail so as to make the present invention easily understood, and the present invention is not always limited to the embodiment including all of the described components. Also, a part of the configuration of one embodiment may be replaced with the configuration of another embodiment, and the configuration of one embodiment may be added to the configuration of another embodiment. Furthermore, another configuration may be added to a part of the configuration of each embodiment, and a part of the configuration of each embodiment may be eliminated or replaced with another configuration.

### INDUSTRIAL APPLICABILITY

The present invention is applicable to a location determination system using Bluetooth beacon.

### REFERENCE SIGNS LIST

1...location determination system, 10...location determination server, 11...beacon information managing unit, 12...location determination unit, 13...beacon detection information, 14...terminal installation information, 15...beacon receiving unit,
20...beacon terminal, 20A-20C...beacon terminal A-C, 20T... termination beacon terminal, 21...beacon region, 21A-21C...beacon region A-C, 22...effective region, 23...detection region, 24...non-detection region, 30...user, 30A-30B...user A-B, 31...user terminal, 31A-31B...user terminal A-B, 32...beacon information, 33...portable terminal, 33A-33C...portable terminal A-C

## Claims

1. A location determination system that estimates a position of a portable terminal capable of receiving beacon signals transmitted from a plurality of beacon terminals in an environment where the beacon terminals are installed, the portable terminal comprising:
a location determination unit that acquires beacon information including a reception intensity of each of the beacon signals received from one or more of the beacon terminals, accumulates history data as beacon detection information, acquires a plurality of pieces of the beacon information accumulated as the beacon detection information and contained within a past predetermined period at every predetermined interval, aggregates the beacon information by scoring, and determines the beacon terminal located most closely based upon scores.

2. A location determination system that estimates a position of a portable terminal capable of receiving beacon signals transmitted from a plurality of beacon terminals in an environment where the beacon terminals are installed, the location determination system comprising:
a location determination server that acquires beacon information transmitted from the portable terminal and including a reception intensity of each of the beacon signals from one or more of the beacon terminals received by the portable terminal, and determines the beacon terminal located most closely to the portable terminal based upon the beacon information,
wherein the location determination server includes:
a beacon information managing unit that accumulates history data of the beacon information transmitted from the portable terminal at constant intervals as beacon detection information; and
a location determination unit that acquires a plurality of pieces of the beacon information accumulated as the beacon detection information and contained within a past predetermined period at every predetermined interval, aggregates the beacon information by scoring for each of the beacon terminals, and determines the beacon terminal located most closely based upon scores.

3. A location determination system that estimates a position of a beacon terminal in an environment where a plurality of devices capable of receiving beacon signals transmitted from the beacon terminal are installed, the location determination system comprising:
a location determination server that acquires beacon information transmitted from one or more of the devices and including a reception intensity of each of the beacon signals from the beacon terminal received by the devices, and determines the device located most closely to the beacon terminal based upon the beacon information,
wherein the location determination server includes:
a beacon information managing unit that accumulates history data of the beacon information transmitted from the device at constant intervals as beacon detection information; and
a location determination unit that acquires a plurality of pieces of the beacon information accumulated as the beacon detection information and contained within a past predetermined period at every predetermined interval, aggregates the beacon information by scoring for each of the devices, and determines the device located most closely based upon scores.

4. The location determination system according to any one of claims 1 to 3,
wherein the location determination unit applies higher weighting to a new piece of the beacon information when scoring the beacon information.

5. The location determination system according to any one of claims 1 to 3,
wherein a plurality of pieces of first beacon information contained in the past predetermined period and acquired by the location determination unit and a plurality of pieces of second beacon information contained in the past predetermined period and acquired after the predetermined interval are partially overlapped with each other.

6. The location determination system according to claim 1 or 2,
wherein the location determination unit determines a positional relation between the portable terminal and the respective beacon terminals based upon a ratio of the scores for each of the plurality of beacon terminals.

7. The location determination system according to claim 3,
wherein the location determination unit determines a positional relation between the respective devices and the beacon terminal based upon a ratio of the scores for each of the plurality of devices.

8. A location determination program that makes a computer execute processes so as to function as a location determination system that estimates a position of a portable terminal capable of receiving beacon signals transmitted from a plurality of beacon terminals in an environment where the beacon terminals are installed,
the location determination program further making the computer execute a location determination process that acquires beacon information including a reception intensity of each of the beacon signals from one or more of the beacon terminals received by the portable terminal, accumulates history data as beacon detection information, acquires a plurality of pieces of the beacon information accumulated as the beacon detection information and contained within a past predetermined period at every predetermined interval, aggregates the beacon information by scoring, and determines the beacon terminal located most closely based upon scores.

9. A location determination program that makes a computer execute processes so as to function as a location determination system that estimates a position of a beacon terminal in an environment where a plurality of devices capable of receiving beacon signals transmitted from the beacon terminal are installed,
the location determination program further making the computer execute a location determination process that acquires beacon information transmitted from one or more of the devices and including a reception intensity of each of the beacon signals from the beacon terminal received by the devices, accumulates history data as beacon detection information, acquires a plurality of pieces of the beacon information accumulated as the beacon detection information and contained within a past predetermined period at every predetermined interval, aggregates the beacon information by scoring, and determines the device located most closely based upon scores.

10. The location determination program according to claim 8 or 9,
wherein the location determination process applies higher weighting to a new piece of the beacon information when scoring the beacon information.

11. The location determination program according to claim 8 or 9,
wherein a plurality of pieces of first beacon information contained in the past predetermined period and acquired in the location determination process and a plurality of pieces of second beacon information contained in the past predetermined period and acquired after the predetermined interval are partially overlapped with each other.

12. The location determination program according to claim 8,
wherein the location determination process determines a positional relation between the portable terminal and the respective beacon terminals based upon a ratio of the scores for each of the plurality of beacon terminals.

13. The location determination program according to claim 9,
wherein the location determination process determines a positional relation between the respective devices and the beacon terminal based upon a ratio of the scores for each of the plurality of devices.
